# EUROPÄISCHE PATENTSCHRIFT

(11) **EP 2 308 813 B1**
(45) Veröffentlichungstag und Bekanntmachung des Hinweises auf die Patenterteilung: **26.09.2012**
(21) Anmeldenummer: 10169045.1
(22) Anmeldetag: 09.07.2010
(51) Int. Cl.: C04B 41/62, C09K 5/06

(54) **Porenbetonsteine sowie Verfahren und Vorrichtung zu ihrer Herstellung**
Porous concrete blocks and process and device for their manufacture
Pierres en béton poreux ainsi que leur procédé et leur dispositif de fabrication

(30) Priorität: 17.09.2009 DE 102009041917
(43) Veröffentlichungstag der Anmeldung: 13.04.2011
(73) Patentinhaber: Xella Baustoffe GmbH, 47119 Duisburg (DE)
(72) Erfinder: Haas, Martin Dr., 14797, Kloster Lehnin (DE)
(74) Vertreter: Solf, Alexander

(56) Entgegenhaltungen:
- D.W. HAWES ET AL: "Latent heat storage in concrete. II", SOLAR ENERGY MATERIALS 1990 NOV, Bd. 21, Nr. 1, November 1990 (1990-11), Seiten 61-80, XP002605676, DOI: DOI:10.1016/0165-1633(90)90043-Z
- D. W. HAWES ET AL: "Latent heat storage in building materials", ENERGY AND BUILDINGS 1993, Bd. 20, Nr. 1, 1993, Seiten 77-86, XP002605677, DOI: DOI:10.1016/0378-7788(93)90040-2

## Beschreibung

Die Erfindung betrifft Porenbetonsteine sowie Verfahren und Vorrichtungen zur Herstellung der Porenbetonsteine.

Porenbetonsteine im Sinne der vorliegenden Erfindung sind in einem Autoklaven aus üblichen, mindestens eine reaktionsfähige CaO- und mindestens eine reaktionsfähige SiO₂-Komponente aufweisenden wässrigen Mischungen hydrothermal gehärtete, offenporige, geschnittene oder ungeschnittene Steine, deren wässrige Mischung vor der Autoklavierung mittels Treibporen oder durch Untermischung von Schaum porosiert worden ist. Unter Verwendung von Schaum hergestellte Porenbetonsteine werden auch Schaumbetonsteine genannt. Porenbetonsteine sind z.B. Plansteine, Planbauplatten, Wandelemente, Stürze, Dachplatten, Deckplatten oder dergleichen und großformatig und meist quaderförmig mit unterschiedlichen, in der Regel genormten Abmessungen. Porenbetonsteine weisen sehr gute Wärmedämmeigenschaften auf.

Zweck der Erfindung ist, das Wärmespeichervermögen der Porenbetonsteine auf einfache und kostengünstige Weise zu erhöhen.

Bekannt ist aus der EP 1 752 509 B1 ein Verfahren zur Erhöhung der Wärmespeicherkapazität von Porenbetonsteinen, wobei in die Steine ein Schmelzwärmespeichermaterial, im Folgenden auch PCM genannt (PCM ist die Abkürzung für "Phase Change Material"), eingebracht wird und zwar in gekapselter Form als Mikrokapseln während der Herstellung der wässrigen Mischungen vor der Autoklavierung der Steine. Nachteilig ist, dass ein relativ teures Produkt, nämlich die Mikrokapseln, verwendet wird, und dass relativ große Mengen von Mikrokapseln zur Erzielung einer ausreichenden Speicherung von Wärmeenergie erforderlich sind. Vorteil der Mikrokapseln ist, dass sie in der Porenbetonproduktion auf einfache Weise der Mischung zugeführt werden können und durch die Verkapselung den Autoklavprozess überstehen können.

Weiterer Stand der Technik bezüglich thermischer Energiespeicherung in Bausteinen wird z. B. in den folgenden Druckschriften erläutert: DE 103 29 583 A1, DE 199 29 861 A1.

Insbesondere in der DE 199 29 861 A1 sind zahlreiche Materialien aufgezählt und genannt, die verwendbar sind als Wärmeenergiespeichermaterialien (PCM), wobei dieser Stand der Technik lehrt, poröse Granulate oder Steine u.a. auch aus Porenbeton in PCM zu tränken und anschließend zu umhüllen, damit das PCM nicht entweichen kann. Die umhüllten Granulate werden als Zuschlagstoffe bei der Herstellung von Baumaterialien, z.B. Betonsteinen, verwendet. Die Tränkung mit PCM kann u.a. auch durch Anlegen eines Vakuums an das Trägermaterial beschleunigt werden, wobei darauf hingewiesen wird, dass sowohl das Trägermaterial als auch das PCM nicht über den Verdampfungspunkt des PCM erhitzt werden dürfen, damit das PCM nicht entweicht.

Aufgabe der Erfindung ist, einfach und kostengünstig Porenbetonsteine mit PCM bzw. Schmelzwärmespeichermaterial zu versehen und eine einfach aufgebaute Anlage zur Herstellung der Steine zu schaffen.

Diese Aufgabe wird durch die Merkmale des Anspruchs 1, 6 und 13 gelöst. Vorteilhafte Weiterbildungen der Erfindung werden in den von diesen Ansprüchen abhängigen Ansprüchen gekennzeichnet.

Nach der Erfindung wird zunächst eine übliche auf die Härtung des Porenbetonmaterials abgestimmte Autoklavreise mit Anfahr-, Halte- und Abfahrphase durchgeführt. Am Ende der Autoklavreise befindet sich der Autoklav auf Umgebungsdruck. Das Porenbetonmaterial hat eine Temperatur von ungefähr 100° C. Die Temperatur des Autoklaven und des Härtezeugs, darunter versteht man z.B. Härteroste, Härteböden und Härtewagen, liegt zu diesem Zeitpunkt meist zwischen 130 und 160° C.

Anstatt den Autoklaven zu öffnen und die gehärteten Porenbetonsteine aus dem Autoklaven zu holen, wird erfindungsgemäß der Autoklav erneut evakuiert mit der vorhandenen Vakuumanlage. Je nach Leistungsfähigkeit der Vakuumanlage werden hierbei Unterdrücke zwischen z.B. minus 0,4 bis minus 0,8 bar, insbesondere zwischen minus 0,5 bis minus 0,6 bar, eingestellt. Durch die Evakuierung verdampft offenbar Wasser aus dem gehärteten Porenbetonmaterial im Oberflächenbereich autoklavseitiger Oberflächen der Steine und kühlt diesen Oberflächenbereich dabei auf Temperaturen von etwa 70° C bis 85° C ab. Diese Tatsache spielt bei der Erfindung eine überraschende Rolle, wie weiter unten erläutert wird.

Unmittelbar nach dem Erreichen des gewünschten Unterdrucks im Autoklaven wird im Autoklaven auf eine autoklavseitige Oberfläche der gehärteten Porenbetonsteine flüssiges Schmelzwärmespeichermaterial, z.B. Paraffin oder Salzhydrate, fein verteilt über Düsen flächig aufgedüst bzw. aufgesprüht und zwar vorzugsweise über einen Zeitraum von 5 bis 30 Minuten, insbesondere von 10 bis 15 Minuten und zwar in Kombination mit der Höhe des eingestellten Unterdrucks derart, dass das Schmelzwärmespeichermaterial zweckmäßigerweise bis 5 cm, vorzugsweise zwischen 1 und 3 cm in die besprühte Oberflächenzone der Steine eindringt (autoklavseitige Oberfläche der Steine meint, dass es sich um Oberflächen handelt, die sich angrenzend an den Innenraum des Autoklaven zwischen Autoklavwandung und Porenbetonblock befinden).

Die Dosiermenge an Schmelzwärmespeichermaterial ist abhängig von der gewünschten mit Schmelzwärmespeichermaterial belegten Dicke der Oberflächenzone und für das jeweilige Porenbetonmaterial empirisch zu ermitteln.

Es ist überraschend, dass durch das erneute Anlegen eines Vakuums am Ende der Abfahrphase einer Autoklavreise das gehärtete Porenbetonmaterial im autoklavseitigen Oberflächenbereich so aufbereitet werden kann, dass eine optimale zonale Belegung mit Schmelzwärmespeichermaterial möglich ist. Überraschenderweise verteilt sich der Sprühnebel des Schmelzwärmespeichermaterials nicht im gesamten Autoklavenraum, sondern schlägt sich an den kühlsten Stellen im Autoklaven, nämlich auf der autoklavseitigen besprühten Oberfläche der Steine nieder. Warum das Schmelzwärmespeichermaterial in die Oberflächenbereiche eindringen kann, ist noch nicht geklärt, denn diese Oberflächenzonen bzw. -bereiche sind trotz des Vakuums vor dem Einbringen des Schmelzwärmespeichermaterials noch mit Wasser gefüllt, das aus dem Inneren der Steine stammt und die oberflächennahen Poren nachgefüllt hat, als durch das angelegte Vakuum diese Poren entleert wurden und das Wasser an die Autoklavenatmosphäre abgegeben wurde. Es findet offenbar beim Aufsprühen eine Verdrängung des Porenwassers statt, die relativ langsam vonstatten geht, weshalb nicht schlagartig besprüht werden darf, sondern langsam dosiert werden muss.

Beim erfindungsgemäßen Verfahren hat das Vakuum nicht die Aufgabe, das Eindringen von Schmelzwärmespeichermaterial in die Poren des Porenbetonsteins zu beschleunigen, wie das beim Stand der Technik der Fall ist, sondern das Vakuum hat die Aufgabe, die Oberflächenzone aufnahmefähig für das Schmelzwärmespeichermaterial zu machen, indem zunächst Porenwasser verdrängt wird und anschließend Schmelzwärmespeichermaterial durch langsame Erhöhung des Druckes im Autoklaven, bewirkt durch das Einbringen des Schmelzwärmespeichermaterials mittels Luft beim Eindüsen, in Poren der Oberflächenzone eingedrückt wird, wobei möglicherweise vorhandenes, aus dem Innern des Porenbetonsteins nachgerücktes Wasser verdrängt wird, möglicherweise wieder zurück in das Innere des Steins.

Durch das Schmelzwärmespeichermaterial werden die bauphysikalischen Eigenschaften des Porenbetonsteins nicht merklich verändert, was bedeutet, dass die Poren des Porenbetonmaterials nicht beeinträchtigend verstopft werden. Außerdem wird Schmelzwärmespeichermaterial in den Poren der Oberflächenzone des Porenbetonmaterials derart fest eingelagert, dass es nicht entweicht, z.B. im eingemauerten Zustand der Steine bei den Energiespeichervorgängen. Eine Umhüllung der mit Schmelzwärmespeichermaterial belegten Zonen, wie das der Stand der Technik lehrt, ist nicht erforderlich.

Das Beladen der Oberflächenzone der Porenbetonsteine kann erleichtert werden, indem das Schmelzwärmespeichermaterial, z.B. in Form von Paraffin, nicht in flüssiger, sondern in gasförmiger Form in die Oberflächenzone eingebracht wird. Je nach chemischer Zusammensetzung liegen die Siedetemperaturen von Schmelzwärmespeichermaterial in Form von Paraffin bei 200 bis 350° C. Die Siedetemperatur von Paraffinen im Vakuum reduziert sich um 100 bis 150° C. Demgemäß ist zweckmäßig, Paraffin vor dem Aufsprühen auf mindestens 150 bis 250° C zu erwärmen und erst dann in den evakuierten Autoklaven strömen zu lassen. Dabei wird dass Paraffin im Vakuum verdampft und kann beim Niederschlagen auf der Porenbetonsteinoberfläche leichter in die Oberflächenzone eindringen. Das dampfförmige Paraffin kondensiert bevorzugt an den kältesten Stellen im Autoklaven. Dies sind, wie oben beschrieben, die autoklavseitigen Oberflächen des Porenbetonmaterials und nicht die Autoklavwandung oder das Härtezeug.

Anhand der Zeichnung wird die Erfindung im Folgenden beispielhaft näher erläutert. Es zeigen:
- Figur 1: schematisch eine erste Ausführungsform einer Autoklavanlage zur Durchführung des erfindungsgemäßen Verfahrens
- Figur 2: schematisch eine weitere Ausführungsform einer Autoklavanlage zur Durchführung des erfindungsgemäßen Verfahrens
- Figur 3: schematisch einen Querschnitt durch einen Porenbetonstein

In einem herkömmlichen Produktionsautoklaven 1 befinden sich Porenbetonsteine 2. In der Nähe des Autoklaven 1 ist außerhalb ein Behälter 3 installiert, der mit einem Wärmespeichermaterial (PCM) 5 gefüllt ist. Dieser Behälter 3 ist mit dem Autoklaven 1 durch eine Rohrleitung 6 verbunden. Diese Rohrleitung 6 ist durch ein eingebautes Regelventil 7 absperrbar.

Wenn mit der obersten Lage der Porenbetonsteine 2 die spätere Sichtfläche einer gemauerten Wand (Innen- oder Außenwand) erstellt werden soll, wird Schmelzwärmespeichermaterial nur auf die Oberfläche dieser Lage versprüht.

Die Dosierung der Schmelzwärmespeichermaterial-Menge kann dabei über den Füllstand des Behälters 3 eingestellt werden. Der Füllstand im Behälter 3 ist z.B. so gewählt, dass die Schmelzwärmespeichermaterial-Menge für eine Behandlung pro Autoklav ausreicht. Der Behälter 3 wird dabei zweckmäßigerweise vollständig entleert. Vor der nächsten Behandlung wird der Behälter 3 wieder mit der entsprechenden Schmelzwärmespeichermaterial-Menge gefüllt. In einer zweckmäßigen Ausgestaltung kann der Behälter 3 mit einer Zusatzheizung 4 ausgerüstet werden, so dass das Schmelzwärmespeichermaterial im Behälter 3 erwärmt werden kann.

Nach einer Ausführungsform der Erfindung wird das Schmelzwärmespeichermaterial bis kurz vor die Verdampfungs- bzw. Siedetemperatur erhitzt. Durch das Vakuum im Autoklaven verdampft das so erwärmte Schmelzwärmespeichermaterial beim Einsaugen. Durch das Verdampfen kann ein noch tieferes Eindringen des Schmelzwärmespeichermaterials in die Porenbetonsteinoberfläche erreicht werden.

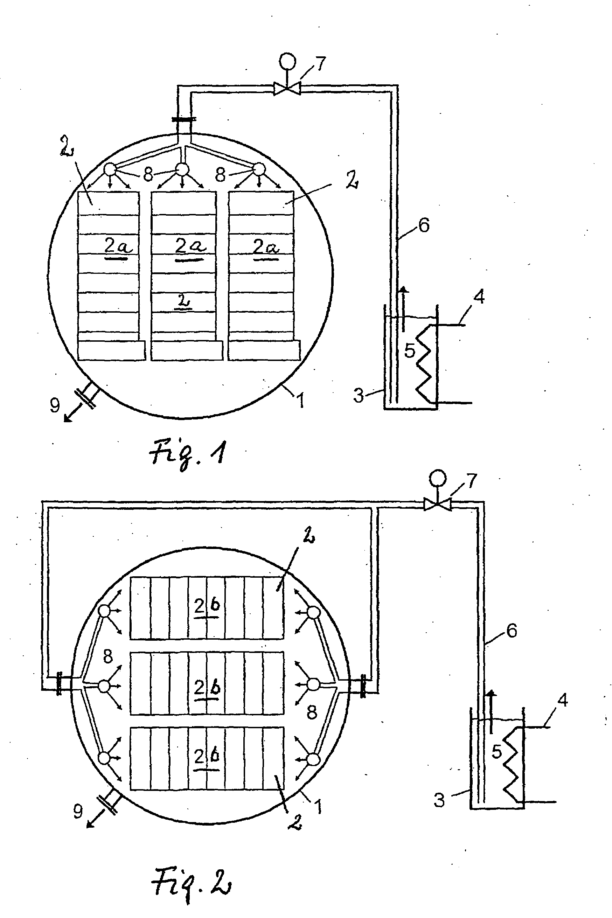

Figur 1 zeigt die Anordnung der Rohrleitung 6 mit Verzweigungen und Verteilerdüsenelementen 8 für drei hochkant nebeneinander auf seitlichem Abstand 2a stehende Porenbetonblöcke. Ein Porenbetonblock 2a besteht aus mehreren aufeinander und voreinander gestapelten geschnittenen Porenbetonsteinen 2. Die Rohrleitungen 6 und deren Verzweigungen sowie die Düsenelemente 8 befinden sich oben im sogenannten Scheitelbereich des Autoklaven 1.

Bei der Ausführungsform nach Figur 2 sind die Rohrleitungen 6 mit Verzweigungen und die Düsenelemente 8 seitlich der drei liegenden Porenbetonblöcke 2b angeordnet, so dass die Porenbetonblöcke seitlich von zwei Seiten besprüht werden. Dabei sind die Porenbetonblöcke 2b liegend autoklaviert worden.

Die Figuren 1 und 2 zeigen eine Autoklavanlage beispielhaft und schematisch. Die von den Sprüh- oder Düsenelementen 8 abgehenden Pfeile sollen das Schmelzwärmespeichermaterial- darstellen, das versprüht wird.

Nach Abschluss einer üblichen Dampfhärtung wird der Autoklav nach dem erfindungsgemäßen Verfahren nicht entladen, sondern erneut evakuiert, über die vorhandene Rohrleitung 9 mit einer vorhandenen Vakuumanlage. Hierbei wird der Unterdruck von z.B. minus 0,8 bar, bevorzugt minus 0,5 bis minus 0,7 bar, eingestellt. Nach Erreichen des gewünschten Unterdrucks wird das Regelventil 7 langsam geöffnet. Durch den Unterdruck im Autoklaven wird das Schmelzwärmespeichermaterial dabei in den Autoklaven eingesaugt und über das Rohrleitungssystem 6 mit den Verteilerdüsenelementen 8 gleichmäßig auf die oberste Lage der Porenbetonsteine aufgebracht. Wichtig ist, dass das Einsaugen in den Autoklaven nicht schlagartig, sondern langsam über einen Zeitraum von 5 bis 30 Minuten, bevorzugt 10 bis 15 Minuten, erfolgt. In gleicher Weise werden somit die Porenbetonsteine mit dem Schmelzwärmespeichermaterial beaufschlagt. Durch dieses gesteuerte Verfahren kann die Eindringtiefe des Schmelzwärmespeichermaterials beeinflusst werden. Bevorzugt wird, eine Eindringtiefe von mindestens einem Zentimeter zu erreichen.

Durch das erfindungsgemäße Verfahren wird gewährleistet, dass sich das Schmelzwärmespeichermaterial von der Oberfläche ausgehend nur in einer in der Tiefe begrenzten Oberflächenzone des Steins befindet, die in der gemauerten Wand zur Wärmeenergiequelle weist. Das Schmelzwärmespeichermaterial befindet sich nicht im gesamten Stein. Dies ist von Vorteil, da sich bei einem Temperatur- bzw. Wärmeenergiewechsel im Innern eines Raums oder außenseitig eines Gebäudes die Phasenumwandlungsvorgänge des Schmelzwärmespeichermaterials und damit die Wärmespeicherung in erster Linie im Oberflächenbereich der Wand abspielen. Die Wirkung des Schmelzwärmespeichermaterials ist somit effektiver als beim Stand der Technik, bei dem das Schmelzwärmespeichermaterial über das Volumen der gesamten mit den Steinen aufgebauten Wand verteilt ist.

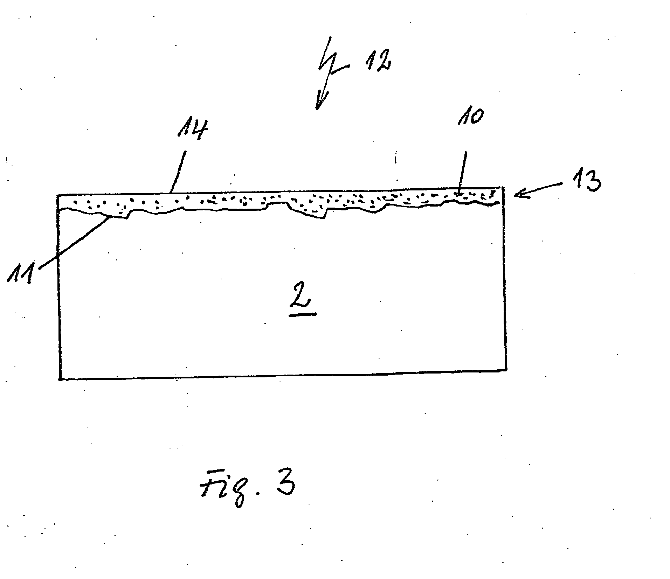

Figur 3 zeigt schematisch einen Querschnitt durch einen Porenbetonstein 2, dessen Gefüge erfindungsgemäß in nur einem einzigen, von der Oberfläche 14 in die Tiefe von wenigen Zentimetern bis zu einer unregelmäßig begrenzten Übergangszone 11 zum unbelegten Gefüge gehenden, Oberflächenbereich 13 mit einem Schmelzwärmespeichermaterial 10 belegt ist. Diese Oberfläche 14 und damit auch der Oberflächenbereich 13 befinden sich in einer nicht dargestellten Wand auf der von der Wärmeenergie 12 beaufschlagten Seite des Porenbetonsteins 2 bzw. der Wand.

## Patentansprüche

1. Porenbetonstein (2) mit üblicher Raumform und üblichen Abmessungen und einer Steinoberfläche (14), die dazu bestimmt ist, nach einem Einbau des Steins in eine Wandung eines Baukörpers, z.B. eines Gebäudes, dem Einfluss von von außen auf die Wandung wirkender alternierender Wärmeenergie ausgesetzt zu sein, aufweisend ein Gefüge aus Treibmakroporen oder aus einem Schaum resultierenden Makroporen, die von einem mit Mikroporen durchsetzten, aus Calciumsilikathydrat-Kristallphasen, insbesondere Tobermorit-Kristallphasen gebildetem Steggerüst umgeben sind,
**dadurch gekennzeichnet, dass** in den Poren eines von nur einer Steinoberfläche (14) des Porenbetonsteins (2) ausgehenden tiefenbegrenzten Oberflächenbereichs (13) von z.B. maximal 5 cm ein Schmelzwärmespeichermaterial enthalten ist.

2. Porenbetonstein nach Anspruch 1,
**dadurch gekennzeichnet, dass** das Schmelzwärmespeichermaterial bis in eine Tiefe von 1 bis 5 cm, insbesondere von 1 bis 3 cm enthalten ist.

3. Porenbetonstein nach Anspruch 1 und/oder 2,
**dadurch gekennzeichnet, dass** das Schmelzwärmespeichermaterial ein Paraffin ist und vorzugsweise in Mengen von 5 bis 20 Gew.-%, insbesondere von 10 bis 15 Gew.-% im Oberflächenbereich enthalten ist.

4. Porenbetonstein nach einem oder mehreren der Ansprüche 1 bis 3,
**dadurch gekennzeichnet, dass** die Steinoberfläche und der Steinoberflächenbereich darunter auf der ganzen Fläche und im gesamten Volumen mit Schmelzwärmespeichermaterial belegt sind.

5. Porenbetonstein nach Anspruch 4,
**dadurch gekennzeichnet, dass** das Schmelzwärmespeichermaterial homogen verteilt ist.

6. Verfahren zur Herstellung eines Porenbetonsteins nach einem oder mehreren der Ansprüche 1 bis 5, wobei in an sich bekannter Weise Porenbetonblöcke mit geschnittenen grünen Porenbetonsteinen in einem geschlossenen Autoklaven zumindest mit einer Anfahr-, einer Halte- und einer Abfahrphase gehärtet werden,
**dadurch gekennzeichnet, dass**
a) nach der Abfahrphase im noch geschlossenen Autoklaven ein Unterdruck angelegt wird,
b) flüssiges oder verdampfendes Schmelzwärmespeichermaterial von außerhalb des Autoklaven in den evakuierten Autoklaven eingebracht wird,
c) das eingebrachte Schmelzwärmespeichermaterial auf nur eine autoklavseitige Oberfläche der gehärteten Steine aufgebracht wird.

7. Verfahren nach Anspruch 6,
**dadurch gekennzeichnet, dass** ein Unterdruck zwischen minus 0,4 bar und minus 0,8 bar, insbesondere zwischen minus 0,5 bar und minus 0,6 bar angelegt wird.

8. Verfahren nach Anspruch 6 und/oder 7,
**dadurch gekennzeichnet, dass** das Schmelzwärmespeichermaterial mittels des im Autoklaven anliegenden Unterdrucks in den Autoklaven gesaugt wird.

9. Verfahren nach einem oder mehreren der Ansprüche 6 bis 8,
**dadurch gekennzeichnet, dass** das Schmelzwärmespeichermaterial auf die Oberfläche gespritzt oder aufgesprüht oder aufgedüst wird.

10. Verfahren nach einem oder mehreren der Ansprüche 6 bis 9,
**dadurch gekennzeichnet, dass** als Schmelzwärmespeichermaterial ein flüssiges Paraffin oder Salzhydrat verwendet wird.

11. Verfahren nach einem oder mehreren der Ansprüche 6 bis 10,
**dadurch gekennzeichnet, dass** das Aufbringen des Schmelzwärmespeichermaterials langsam innerhalb von 5 bis 30, insbesondere von 10 bis 15 Minuten erfolgt.

12. Verfahren nach einem oder mehreren der Ansprüche 6 bis 11,
**dadurch gekennzeichnet, dass** das Schmelzwärmespeichermaterial vor dem Einbringen in den Autoklaven bis maximal zur Siedetemperatur erhitzt und in diesem Zustand in den Autoklaven eingebracht und zum Aufbringen auf die Oberfläche zum Verdampfen gebracht wird.

13. Autoklavanlage zum Härten von Porenbetonsteinen und zur Herstellung von Porenbetonsteinen nach einem oder mehreren der Ansprüche 1 bis 5 sowie zur Durchführung des Verfahrens nach einem oder mehreren der Ansprüche 6 bis 12, mit einem über einen Rohrstutzen (9) mit einer Vakuumeinrichtung in Verbindung stehenden Produktionsautoklaven (1) und mit mindestens einem außerhalb des Autoklaven (1) angeordneten, flüssiges Schmelzwärmespeichermaterial enthaltenden Behälter (3), wobei der Behälter (3) mit dem Autoklaven (1) über mindestens eine in den Autoklaven (1) führende Rohrleitung (6) in Verbindung steht, mit der Schmelzwärmespeichermaterial in den Autoklaven (1) geleitet werden kann, in der Rohrleitung (6) ein Regelventil (7) angeordnet ist und am freien Ende der Rohrleitung (6) im Autoklaven (1) Spritz-, Düsen- oder Sprühelemente (8) zum Aufspritzen, Aufdüsen oder Versprühen von Schmelzwärmespeichermaterial vorgesehen sind.

14. Autoklavanlage nach Anspruch 13,
**dadurch gekennzeichnet, dass** der Behälter (3) mit einer Heizung (4) zur Erwärmung des Schmelzwärmespeichermaterials im Behälter ausgerüstet ist.

15. Autoklavanlage nach Anspruch 13 und/oder 14,
**dadurch gekennzeichnet, dass** die Spritz-, Düsen- oder Sprühelemente (8) im Scheitelbereich des Autoklaveninnenraums oder in den beiden Seitenbereichen des Autoklaveninnenraums angeordnet sind.

## Claims

1. An aerated concrete block (2) with conventional three-dimensional form and conventional dimensions and a block surface (14) which is intended, once the block has been incorporated in a wall of a built structure, e.g. a building, to be exposed to the influence of alternating thermal energy acting on the wall from the outside, having a structure consisting of blown macropores or macropores resulting from a foam which are surrounded by a bar-type framework which is interspersed with micropores, which is formed from calcium silicate hydrate crystalline phases, in particular tobermorite crystalline phases,
**characterised in that** a heat-of-fusion storage material is contained in the pores of a depth-limited surface region (13) of e.g. at most 5 cm starting from only one block surface (14) of the aerated concrete block (2).

2. An aerated concrete block according to Claim 1, **characterised in that** the heat-of-fusion storage material is contained to a depth of 1 to 5 cm, in particular of 1 to 3 cm.

3. An aerated concrete block according to Claim 1 and/or 2, **characterised in that** the heat-of-fusion storage material is a paraffin and is contained preferably in amounts of 5 to 20% by weight, in particular of 10 to 15% by weight, in the surface region.

4. An aerated concrete block according to one or more of Claims 1 to 3, **characterised in that** the block surface and the block surface region thereunder are covered over the entire surface and in the entire volume with heat-of-fusion storage material.

5. An aerated concrete block according to Claim 4, **characterised in that** the heat-of-fusion storage material is homogeneously distributed.

6. A method for the production of an aerated concrete block according to one or more of Claims 1 to 5, wherein in a manner known per se aerated concrete block units with cut green aerated concrete blocks are hardened in a closed autoclave at least with a start-up phase, a holding phase and a shutdown phase,
**characterised in that**
a) after the shutdown phase a partial vacuum is applied in the still-closed autoclave,
b) liquid or evaporating heat-of-fusion storage material is introduced into the evacuated autoclave from outside the autoclave,
c) the introduced heat-of-fusion storage material is applied to only one surface, on the autoclave side, of the hardened blocks.

7. A method according to Claim 6, **characterised in that** a partial vacuum of between minus 0.4 bar and minus 0.8 bar, in particular between minus 0.5 bar and minus 0.6 bar, is applied.

8. A method according to Claim 6 and/or 7, **characterised in that** the heat-of-fusion storage material is drawn into the autoclave by means of the partial vacuum applied in the autoclave.

9. A method according to one or more of Claims 6 to 8, **characterised in that** the heat-of-fusion storage material is sprinkled or sprayed or injected onto the surface.

10. A method according to one or more of Claims 6 to 9, **characterised in that** a liquid paraffin or salt hydrate is used as heat-of-fusion storage material.

11. A method according to one or more of Claims 6 to 10, **characterised in that** the application of the heat-of-fusion storage material takes place slowly within 5 to 30, in particular from 10 to 15, minutes.

12. A method according to one or more of Claims 6 to 11, **characterised in that** the heat-of-fusion storage material before introduction into the autoclave is heated to at most boiling temperature and is introduced into the autoclave in this state and is caused to evaporate for application to the surface.

13. An autoclave system for hardening aerated concrete blocks and for the production of aerated concrete blocks according to one or more of Claims 1 to 6 and for carrying out the method according to one or more of Claims 5 to 12, with a production autoclave (1) which communicates with a vacuum means via a pipe branch (9) and with at least one vessel (3) containing liquid heat-of-fusion storage material arranged outside the autoclave (1), the vessel (3) being connected to the autoclave (1) via at least one pipe (6) which leads into the autoclave (1), with which pipe heat-of-fusion storage material can be conducted into the autoclave (1), a control valve (7) is arranged in the pipe (6) and injection elements, nozzle elements or spraying elements (8) for sprinkling, injecting or spraying heat-of-fusion storage material are provided on the free end of the pipe (6) in the autoclave (1).

14. An autoclave system according to Claim 13, **characterised in that** the vessel (3) is equipped with a heating means (4) for heating the heat-of-fusion storage material in the vessel.

15. An autoclave system according to Claim 13 and/or 14, **characterised in that** the injection elements, nozzle elements or spraying elements (8) are arranged in the apex region of the interior of the autoclave or in the two side regions of the interior of the autoclave.

## Revendications

1. Pierre en béton poreux (2) présentant une forme tridimensionnelle habituelle et des dimensions habituelles et une surface de pierre (14), qui est destinée à être exposée après un montage de la pierre dans une paroi d'une structure de construction, par exemple d'un bâtiment, à l'influence de l'énergie thermique agissant en alternance depuis l'extérieur, sur la paroi, présentant une structure en macropores de soufflage ou en macropores résultant d'une mousse, qui sont entourés d'une structure traversante traversée par des micropores, formée à partir de phases cristal d'hydrate de silicate de calcium, en particulier de phases cristal de tobermorite,
**caractérisée en ce que**
un matériau accumulateur de chaleur de fusion est contenu dans les pores d'une zone de surface (13) de par exemple 5 cm au maximum, limitée en profondeur et partant d'une seule surface de pierre (14) de la pierre en béton poreux (2).

2. Pierre en béton poreux selon la revendication 1,
**caractérisée en ce que**
le matériau accumulateur de chaleur de fusion est contenu jusque dans une profondeur allant de 1 à 5 cm, en particulier allant de 1 à 3 cm.

3. Pierre en béton poreux selon la revendication 1 et/ou 2,
**caractérisée en ce que**
le matériau accumulateur de chaleur de fusion est une paraffine et est contenu dans la zone de surface de préférence dans des quantités allant de 5 à 20 % en poids, en particulier allant de 10 à 15 %en poids.

4. Pierre en béton poreux selon l'une quelconque ou plusieurs des revendications 1 à 3,
**caractérisée en ce que**
la surface de pierre et la zone de surface de pierre sont recouvertes en dessous sur toute la surface et dans le volume global du matériau accumulateur de chaleur de fusion.

5. Pierre en béton poreux selon la revendication 4,
**caractérisé en ce que**
le matériau accumulateur de chaleur de fusion est réparti de manière homogène.

6. Procédé de fabrication d'une pierre en béton poreux selon l'une quelconque ou plusieurs des revendications 1 à 5, dans lequel, de manière conventionnelle, des blocs en béton poreux comportant des pierres en béton poreux découpées, de couleur verte, sont durcis dans un autoclave fermé au moins lors d'une phase de démarrage, d'une phase de maintien et d'une phase de ralentissement,
**caractérisé en ce que**
a) une pression négative est appliquée dans l'autoclave encore fermé après la phase de ralentissement,
b) du matériau accumulateur de chaleur de fusion liquide ou à l'état de vapeur est introduit depuis l'extérieur de l'autoclave dans l'autoclave sous vide,
c) le matériau accumulateur de chaleur de fusion introduit est appliqué sur une seule surface côté autoclave des pierres durcies.

7. Procédé selon la revendication 6,
**caractérisé en ce que**
une pression négative comprise entre moins 0,4 bar et moins 0,8 bar, en particulier comprise entre moins 0,5 bar et moins 0,6 bar est appliquée.

8. Procédé selon la revendication 6 et/ou 7,
**caractérisé en ce que**
le matériau accumulateur de chaleur de fusion est aspiré dans l'autoclave au moyen de la pression négative présente dans l'autoclave.

9. Procédé selon l'une quelconque ou plusieurs des revendications 6 à 8, **caractérisé en ce que**
le matériau accumulateur de chaleur de fusion est injecté ou pulvérisé ou projeté sur la surface.

10. Procédé selon l'une quelconque ou plusieurs des revendications 6 à 9,
**caractérisé en ce que**
l'on utilise comme matériau accumulateur de chaleur de fusion une paraffine liquide ou de l'hydrate salin.

11. Procédé selon l'une quelconque ou plusieurs des revendications 6 à 10,
**caractérisé en ce que**
l'application du matériau accumulateur de chaleur de fusion est effectuée de manière lente dans un laps de temps compris entre 5 et 30 minutes, en particulier entre 10 et 15 minutes.

12. Procédé selon l'une quelconque ou plusieurs des revendications 6 à 11,
**caractérisé en ce que**
le matériau accumulateur de chaleur de fusion est porté, avant d'être introduit dans l'autoclave, à une température pouvant aller au maximum jusqu'à la température de fusion et est introduit dans cet état dans l'autoclave, puis est amené à l'état de vapeur afin de permettre l'application sur la surface.

13. Installation autoclave servant à durcir des pierres en béton poreux et servant à produire des pierres en béton poreux selon l'une quelconque ou plusieurs des revendications 1 à 5 ainsi que pour la mise en oeuvre du procédé selon l'une quelconque ou plusieurs des revendication 6 à 12, comportant un autoclave de production (1) relié à une installation de production de vide par l'intermédiaire d'une tubulure (9) et au moins un contenant (3) disposé à l'extérieur de l'autoclave (1), contenant du matériau accumulateur de chaleur de fusion liquide, dans lequel le contenant (3) est relié à l'autoclave (1) par l'intermédiaire au moins d'une conduite tubulaire (6) conduisant dans l'autoclave (1), avec laquelle le matériau accumulateur de chaleur de fusion peut être conduit dans l'autoclave (1), dans laquelle une soupape de régulation (7) est disposée et conduite tubulaire (6) sur l'extrémité libre de laquelle sont prévus dans l'autoclave (1) des éléments d'injection, de projection ou de pulvérisation (8) servant à injecter, projeter ou pulvériser du matériau accumulateur de chaleur de fusion.

14. Installation autoclave selon la revendication 13,
**caractérisée en ce que**
le contenant (3) est équipé d'un dispositif de chauffage (4) servant à chauffer le matériau accumulateur de chaleur de fusion dans le contenant.

15. Installation autoclave selon la revendication 13 et/ou 14,
**caractérisée en ce que**
les éléments d'injection, de projection ou de pulvérisation (8) sont disposés dans la zone de sommet de l'espace intérieur de l'autoclave ou dans les deux zones latérales de l'espace intérieur de l'autoclave.
